# EUROPEAN PATENT APPLICATION

(11) **EP 2 390 478 A1**
(43) Date of publication of application: **30.11.2011**
(21) Application number: 09807570.8
(22) Date of filing: 09.01.2009
(51) Int. Cl.: F01N 3/08

(54) **APPARATUS FOR DETERMINATION OF COMPONENT PASSING THROUGH CATALYST, AND EXHAUST GAS PURIFICATION APPARATUS FOR INTERNAL COMBUSTION ENGINE**

(71) Applicant: Toyota Jidosha Kabushiki Kaisha, Toyota-shi, Aichi 471-8571 (JP)
(72) Inventor: SATO, Masaaki, Toyota-shi Aichi 471-8571 (JP); ODA, Tomihisa, Toyota-shi Aichi 471-8571 (JP); ASAURA, Shinya, Toyota-shi Aichi 471-8571 (JP); TOSHIOKA, Shunsuke, Toyota-shi Aichi 471-8571 (JP)
(74) Representative: Kuhnen & Wacker
(86) International application number: PCT/JP2009/050257
(87) International publication number: WO 2010/079621

(57) **Abstract**

The present invention comprises a selective reduction type NOx catalyst (C1) located in an exhaust passage (P) and being capable of purifying NOx with ammonia, an oxidation catalyst (C2) located downstream of the selective reduction type NOx catalyst (C1), an upstream sensor (S1) located between the selective reduction type NOx catalyst (C1) and the oxidation catalyst (C2) and having ability to detect both ammonia and NOx, a downstream sensor (S2) located downstream of the oxidation catalyst (C2) and having ability to detect both ammonia and NOx, and determining means for determining a component passing through the selective reduction type NOx catalyst, based upon a relation between output of the upstream sensor (S1) and output of the downstream sensor (S2).

## Description

### TECHNICAL FIELD

The present invention relates to a catalyst passing component determining apparatus for determining a component passing through a selective reduction type NOx catalyst and an exhaust purification apparatus for an internal combustion engine equipped with the catalyst passing component determining apparatus.

### BACKGROUND ART

There is generally known an exhaust purification apparatus including a NOx catalyst for purifying nitrogen oxides (NOx) contained in an exhaust gas, as the exhaust purification apparatus arranged in an exhaust system for an internal combustion engine such as a diesel engine. Various types of the NOx catalysts are known, but among them, there is well known a selective reduction type NOx catalyst (SCR: Selective Catalytic Reduction) (hereinafter, referred to as SCR catalyst) for reducing and removing NOx by addition of a reducing agent. Urea is known as the reducing agent and urea water (urea solution) is usually injected and supplied in an exhaust gas upstream of the catalyst. When the urea water receives heat from the exhaust gas or the catalyst, ammonia is generated therefrom, thereby reducing NOx on the SCR catalyst.

In a case of using the urea as the reducing agent in the SCR catalyst, a purifying performance of NOx therein varies in correspondence to an addition amount of the urea water, and the addition amount of the urea water has an appropriate range depending on an engine operating state. When the addition amount of the urea water is less than the appropriate amount, in the SCR catalyst the NOx can be not purified sufficiently and the NOx passes through the SCR catalyst as it is (NOx slip). On the other hand, when the addition amount of the urea water exceeds the appropriate range and the urea water is excessive, the extra ammonia passes through the SCR catalyst as it is (ammonia slip). Therefore, it is important to appropriately check generation of the NOx slip and the ammonia slip in the SCR catalyst.

For example, Patent Document 1 discloses an exhaust purification apparatus for an internal combustion engine provided with a SCR catalyst located in an exhaust passage for selectively reducing NOx in the exhaust gas by adding urea water thereto and a NOx sensor located downstream of the SCR catalyst to detect NOx and ammonia and outputting a value in accordance with each concentration thereof. The exhaust purification apparatus is configured so that, when a deviation between an output value of the NOx sensor and an appropriate NOx concentration exceeds a predetermined value, the addition amount of the urea water is reduced to check a change of the NOx concentration deviation due to reduction of the addition amount of the urea water, thus making determination of the NOx slip and the ammonia slip.

Patent Document 1: Japanese Patent Laid-Open No. 2008-157136

### DISCLOSURE OF THE INVENTION

In order to determine the NOx slip or the ammonia slip with the exhaust purification apparatus described in Patent Document 1, it is required that the addition amount of the urea water is changed and a change of the output value of the NOx sensor due to the change is observed. Therefore, making such a determination raises a problem of possibly promoting the NOx slip intentionally. Further, since the change of the output value of the NOx sensor is thus observed by changing the addition amount of the urea water, the NOx slip or the ammonia slip can not be determined quickly and at an appropriate time.

Therefore, the present invention is made in view of the foregoing problem and an object of the present invention is to appropriately determine the NOx slip and the ammonia slip.

In order to accomplish the above object, the present invention provides a catalyst passing component determining apparatus comprising a selective reduction type NOx catalyst located in an exhaust passage and being capable of purifying NOx with ammonia, an oxidation catalyst located downstream of the selective reduction type NOx catalyst, an upstream sensor located between the selective reduction type NOx catalyst and the oxidation catalyst and having ability to detect both ammonia and NOx, a downstream sensor located downstream of the oxidation catalyst and having ability to detect both ammonia and NOx, and determining means for determining a component passing through the selective reduction type NOx catalyst based upon a relation between output of the upstream sensor and output of the downstream sensor.

For example, the determining means may determine that the NOx passes when the output of the upstream sensor and the output of the downstream sensor change in a similar manner from target outputs thereof. In addition, the determining means may determine that the ammonia passes when an output change of the upstream sensor from the target output and an output change of the downstream sensor from the target output each have a different tendency.

It should be noted that the present invention relates to an exhaust purification apparatus for an internal combustion engine equipped with any of various types of catalyst passing component determining apparatuses. The exhaust purification apparatus for the internal combustion engine is preferably provided with reducing agent supplying means for supplying reducing agent to the selective reduction type NOx catalyst, wherein the reducing agent supplying means may control an addition reducing agent amount to the selective reduction type NOx catalyst based upon a determination result of the catalyst passing component determining apparatus.

### BRIEF DESCRIPTION OF THE DRAWINGS

[Fig. 1] Fig. 1 is a schematic diagram showing a catalyst passing component determining apparatus according to an embodiment of the present invention;
[Fig. 2A] Fig. 2A is a graph in regard to a state when NOx passes through a SCR catalyst and the graph showing an example of a change in time of output of an upstream NOx sensor;
[Fig. 2B] Fig. 2B is a graph in regard to a state when NOx passes through the SCR catalyst and the graph showing an example of a change in time of output of a downstream NOx sensor; [Fig. 3A] Fig. 3A is a graph in regard to s state when ammonia passes through the SCR catalyst and the graph showing an example of a change in time of output of the upstream NOx sensor;
[Fig. 3B] Fig. 3B is a graph in regard to a state when ammonia passes through the SCR catalyst and the graph showing an example of a change in time of output of the downstream NOx sensor; [Fig. 4] Fig. 4 is a flow chart for determining a leak component from the SCR catalyst;
[Fig. 5] Fig. 5 is a schematic system diagram for an internal combustion engine to which an exhaust purification apparatus for an internal combustion engine equipped with a determining apparatus similar to the apparatus in Fig. 1 according to an embodiment in the present invention is applied;
[Fig. 6] Fig. 6 is a flow chart for controlling addition and supply of urea water; and
[Fig. 7] Fig. 7 is a schematic system diagram for an internal combustion engine to which an exhaust purification apparatus for an internal combustion engine equipped with a determining apparatus similar to the apparatus in Fig. 1 according to another embodiment in the present invention is applied.

### BEST MODES FOR CARRYING OUT THE INVENTION

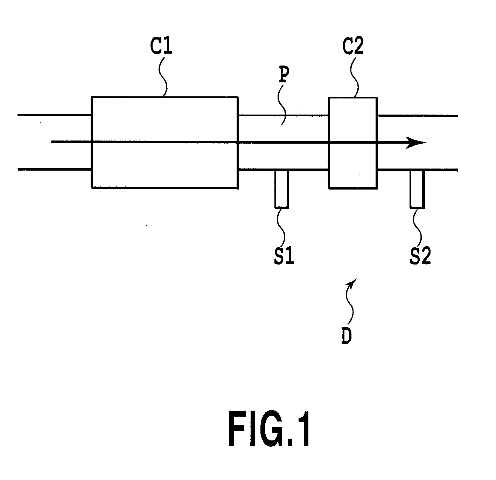

First, a catalyst passing component determining apparatus (hereinafter, referred to as determining apparatus) D according to an embodiment in the present invention will be explained with reference to Fig. 1. In a schematic diagram in Fig. 1, a SCR catalyst C1 located in a catalytic converter and an oxidation catalyst C2 located in the catalytic converter are arranged in an exhaust passage P in that order (in series) from upstream to downstream. In addition, a NOx sensor.S1 is arranged between the SCR catalyst C1 and the oxidation catalyst C2 and a NOx sensor S2 is arranged downstream of the oxidation catalyst C2. Since the NOx sensor S1 is positioned upstream of the NOx sensor S2, it may be called an upstream sensor, and on the other hand, the NOx sensor S2 may be called a downstream sensor. The NOx sensors S1 and S2 each are connected electrically to control means or calculation means such as ECU (not shown in Fig.1). In addition, the control means or the calculation means, as described later, determines leak of NOx or leak of ammonia from the SCR catalyst C1. That is, the control means or the calculation means each has a function of the determining means. It should be noted that in Fig.1, a direction of an exhaust gas flow is expressed in an arrow.

The NOx sensors S1 and S2 each have ability for detecting NOx and ammonia. The NOx sensors S1 and S2 each have a detecting part provided with a catalyst component (for example, zirconia), where an O₂ component is first removed from NOx (for example, NO₂) in the exhaust gas by a function of the catalyst component and the remaining NO component is decomposed into N₂ and O₂ allowing detection of NOx concentration by measuring this O₂ amount. Because of such a construction, when ammonia exists in the NOx sensors S1 and S2, an ammonia component is oxidized in the detecting part to generate a NO component (4NH₃ + 5O₂ →4NO + 6H₂O), whereby the NOx sensors S1 and S2 each have the characteristic of detecting also an O₂ amount decomposed from the NOx component. That is, the NOx sensors S1 and S2 each have the characteristic of detecting also the ammonia in the exhaust gas similarly to the NOx. It should be noted that the NOx sensors S1 and S2 may be equipped with the other construction or each may be equipped with a different construction as long as the NOx sensors S1 and S2 can respond to both of NOx and ammonia.

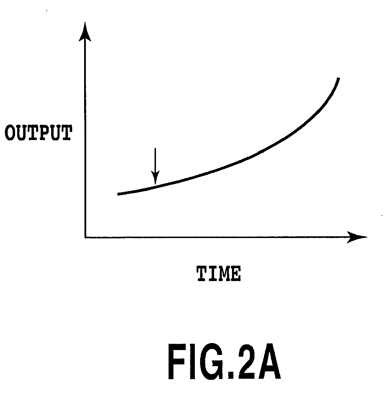

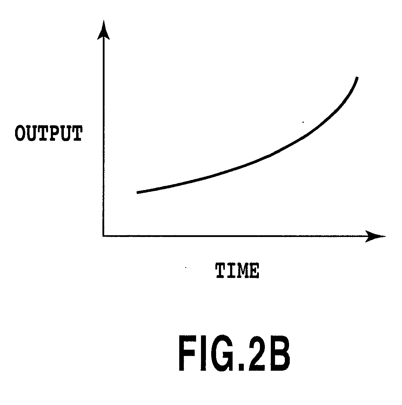

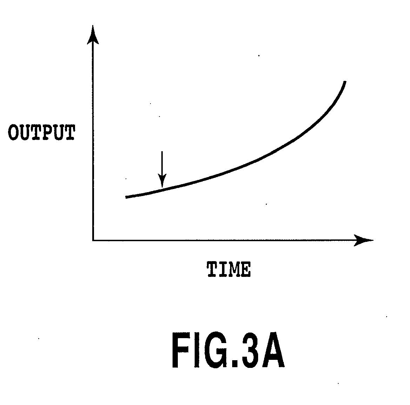

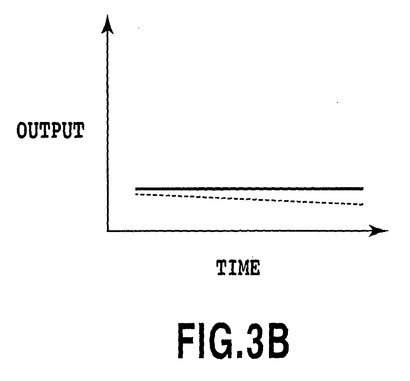

The control means or the calculation means in the determining apparatus D determines (detects) leak of NOx or leak of ammonia from the SCR catalyst C1 based upon a relation between output of the NOx sensor S1 and output of the NOx sensor S2 as described below. Here, Fig. 2 (Fig. 2A and Fig. 2B) shows graphs in regard to a state when NOx passes through the SCR catalyst C1. Fig. 2A shows an example of a change in time of output of the upstream NOx sensor S1 and Fig. 2B shows an example of a change in time of output of the downstream NOx sensor S2. On the other hand, Fig. 3 (Fig. 3A and Fig. 3B) shows graphs in regard to a state when ammonia passes through the SCR catalyst C1. Fig. 3A corresponds to Fig. 2A and shows an example of a change in time of output of the upstream NOx sensor S1. Fig. 3B corresponds to Fig. 2B and shows an example of a change in time of output of the downstream NOx sensor S2. However, each graph of Figs. 2 and 3 shows an example of continuous electrical output (for example, output current or output voltage) for a predetermined time from the NOx sensors S1 and S2. In addition, in Fig. 2A or in Fig. 3A, the target output, that is, the output in a state where the leak of the NOx or the ammonia from the SCR catalyst does not substantially occur is indicated in an arrow. It should be noted that the output of each graph in Fig. 2 and Fig. 3 may be a value found by converting the electrical output from each of the sensors S1 and S2. That is, the control means or the calculation means in the determining apparatus D may use, at the time of determining the leak of the NOx or the leak of the ammonia from the SCR catalyst C1, numerical values found by calculation on the basis of output signals from the NOx sensor S1 and S2, for example, a NOx concentration, as the output of the NOx sensor S1 or the output of the NOx sensor S2. This NOx concentration reflects the existence of both of the NOx and the ammonia.

As understood from Fig. 2 and Fig. 3, in a case where NOx passes through the SCR catalyst C1 and leaks therefrom (in a case where the NOx slip occurs), the output from the upstream NOx sensor S1 increases and exceeds the target output, and the output from the downstream NOx sensor S2 likewise increases. This is because, when the component leaked from the SCR catalyst C1 is NOx, the NOx is not processed to be purified in the oxidation catalyst and is led to the downstream NOx sensor S2. On the other hand, when ammonia passes through the SCR catalyst C1 and leaks therefrom (in a case where the ammonia slip occurs), the output from the upstream NOx sensor S1 increases and exceeds the target output, but the output of the downstream NOx sensor S2 does not increase. This is because, in a case where the component leaked from the SCR catalyst C1 is ammonia, the ammonia is processed to be purified in the oxidation catalyst C2. It should be noted that, as shown in Fig. 3B, in a case where the component leaked from the SCR catalyst C1 is ammonia, the output from the downstream NOx sensor S2 continues to be substantially in conformity to the target output as shown in a solid line or possibly changes reversely to an output change tendency from the upstream NOx sensor S1 as shown in a dotted line.

In a case where the NOx slip thus occurs, the output of the upstream NOx sensor S1 changes in accordance with a NOx amount leaked and such output change likewise occurs in the downstream NOx sensor S2. On the other hand, in a case where the ammonia slip thus occurs, the output of the upstream NOx sensor S1 changes in accordance with an ammonia amount leaked, but such output change does not approximately occur in the downstream NOx sensor S2. That is, when the output of the upstream NOx sensor S1 and the output of the downstream NOx sensor S2 change similarly from target outputs, it is determined that NOx passes through the SCR catalyst C1, and on the other hand, when the output change of the upstream NOx sensor S1 from the target output thereof differs in tendency from the output change of the downstream NOx sensor S2 from the target output thereof, it is determined that ammonia passes through the SCR catalyst C1. The present invention can determine whether the component which passes through the SCR catalyst C1 is NOx or ammonia by using a relation between outputs of the NOx sensors S1 and S2. It should be noted that the target output of the upstream NOx sensor S1 may be the same as or different from the target output of the downstream NOx sensor S2.

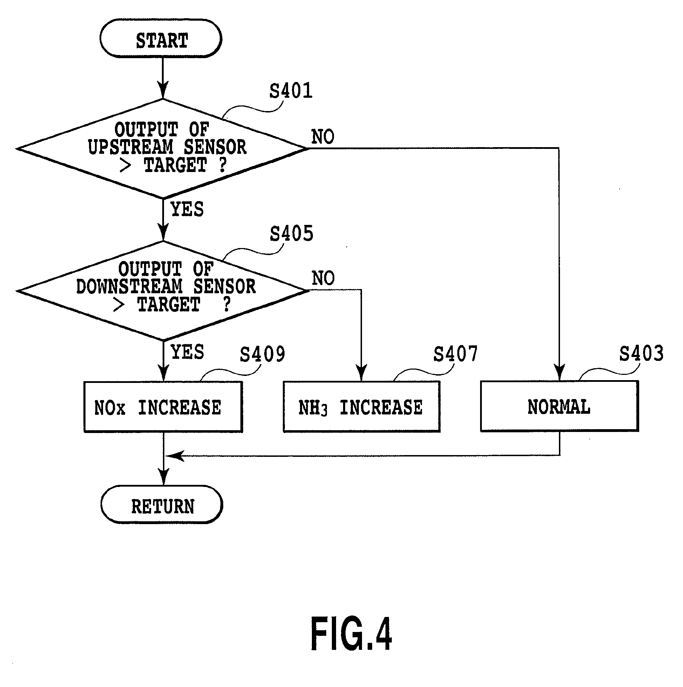

An example of the procedure of this determination will be explained on the basis of a flow chart in Fig. 4. At step S401, the control means or the calculation means determines whether or not the output of the upstream NOx sensor S1 is larger than the target output thereof. When a negative determination is made at step S401, the process goes to step S403, wherein it is determined that it is normal as a result. It should be noted that "normal" means a state where either NOx or ammonia does not leak from the SCR catalyst C1 or the leak amount is within an allowance range.

On the other hand, when a positive determination is made at step S401, it is determined at step S405 whether or not the output of the downstream NOx sensor S2 is larger than the target output thereof. When a negative determination is made at step 5405, the process goes to step S407, wherein it is determined that ammonia is leaked (ammonia slip) as a result. On the other hand, when a positive determination is made at step 5405, the process goes to step 5409, wherein it is determined that NOx is leaked (NOx slip) as a result.

Such determination control for the SCR catalyst passing component based upon the flow chart in Fig. 4 can be repeated each predetermined time when the control means or the calculation means makes a determination of NOx or ammonia. It should be noted that such determination control can be performed under various conditions, for example, may continue to be performed all the way when an internal combustion engine is operating or may be performed in a restricted manner only when the internal combustion engine is in a predetermined operating state.

It should be noted that it is here determined simply whether the NOx is leaked or the ammonia is leaked based upon the relation between output of the upstream NOx sensor S1 and output of the downstream NOx sensor S2. However, the leak of the NOx or the leak of the ammonia may be configured to be step by step or continuously determined by retrieving data in advance defined by experiments based upon the outputs of both the sensors S1 and S2 at some point or at plural points. In addition, here NOx sensors are used as the upstream NOx sensor S1 and the downstream NOx sensor S2, but instead of them, there may be used various types of sensors which can respond to NOx and ammonia, that is, produce output in accordance with the existence thereof.

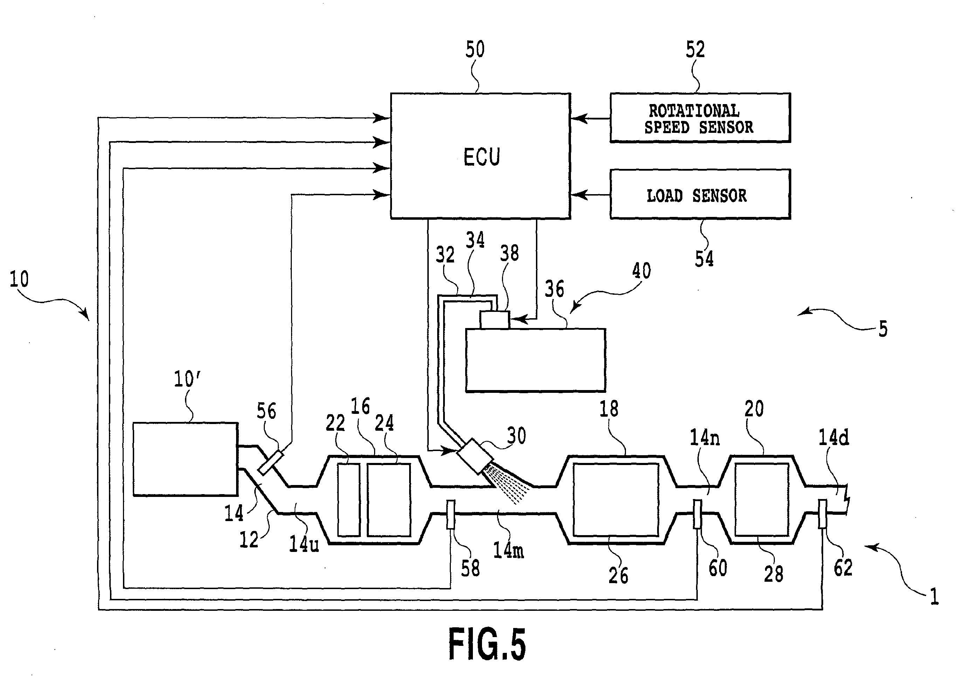

Next, an exhaust purification apparatus for an internal combustion engine (hereinafter, referred to as exhaust purification apparatus) 5 equipped with the determining apparatus 1 similar to the above determining apparatus D according to an embodiment of the present invention will be explained. Fig. 5 is a schematic system diagram of an internal combustion engine 10 to which the exhaust purification apparatus 5 is applied. The internal combustion engine 10 is a compression ignition type internal combustion engine for an automobile, that is, a diesel engine, and in Fig. 5, a part of the exhaust system extending from an engine body 10' is expressed in a magnified manner (an intake system, engine internal mechanisms and the like are omitted). A first catalytic converter 16, a second catalytic converter 18 and a third catalytic converter 20 are serially located in the order from the upstream in an exhaust passage 14 defined by an exhaust pipe 12 in the internal combustion engine 10. An oxidation catalyst 22 for oxidizing and purifying unburned components (particularly HC) in the exhaust gas and a DPR (diesel particulate reduction) catalyst 24 for trapping and burning particulate matters (PM) in the exhaust gas for removal are arranged in the first catalytic converter 16 in the order from the upstream. In addition, a SCR catalyst 26 as a catalyst having a NOx purification ability for reducing and purifying NOx in the exhaust gas is located in the second catalytic converter 18. An oxidation catalyst 28 for processing ammonia passing through the SCR catalyst 26 is located in the third catalytic converter 20. It should be noted that the SCR catalyst 26 corresponds to the above SCR catalyst C1 and the oxidation catalyst 28 corresponds to the above oxidation catalyst C2.

A urea adding valve 30 is located between the SCR catalyst 26 and the DPR catalyst 24, that is, in an exhaust passage 14m downstream of the DPR catalyst 24 and upstream of the SCR catalyst 26 for selectively adding urea as a reducing agent to be capable of adding ammonia to the SCR catalyst 26. The urea is used as the form of urea water and is injected and supplied in the exhaust passage 14 toward the SCR catalyst 26 downstream of the urea adding valve 30. A urea water tank 36 for reserving the urea water therein is connected to the urea adding valve 30 through a urea water supplying passage 34 defined by a urea water supplying pipe 32 for supplying the urea water to the urea adding valve 30. In addition, a pump 38 is provided for supplying the urea water under pressure toward the urea adding valve 30 from the urea water tank 36. However, a urea concentration of the urea water as the reducing agent may be 32.5% by weight for restricting freeze of the urea water in a cold region or the like.

It should be noted that here, a urea supplying apparatus 40 is configured to include the urea adding valve 30, the urea water supplying passage 34, the urea water tank 36 and the pump 38. However, the urea water added from the urea adding valve 30 is here substantially and directly added to the SCR catalyst 26 through the exhaust passage 14, but a dispersion plate or the like for dispersing and directing in a wide range the addition urea to appropriately supply the addition urea all over the SCR catalyst 26 may be located at an inlet opening of the second catalytic converter 18 having the SCR catalyst 26 or near it.

The selective reduction type NOx catalyst, that is, the SCR catalyst 26 is here configured to have zeolite having Si, 0, and Al as main components and containing Fe ions. The SCR catalyst 26 reduces and purifies NOx (under existence of ammonia generated due to chemical reaction of addition urea (urea water)) when the catalyst temperature is within an active temperature region (NOx purifying temperature region) and the urea is added from the urea supplying apparatus 40. The urea is supplied as urea water as described above, and is hydrolyzed and thermally decomposed with heat in the exhaust passage 14 (CO(NH₂)₂→ NH₃ + HOCN, HOCN + H₂O → NH₃ + CO₂). As a result, ammonia is generated. That is, when the urea (urea water) is added to the SCR catalyst 26, the ammonia is supplied on the SCR catalyst 26. This ammonia reacts to NOx on the SCR catalyst 26 to reduce the NOx. It should be noted that as an alternative of the SCR catalyst 26, there may be adopted a catalyst formed by carrying a vanadium catalyst (V₂O₅) on a surface of a substrate composed of alumina or the like. The present invention may allow various types of SCR catalysts.

The DPR catalyst 24 as one kind of a diesel particulate filter (DPF) is of a filter structure and carries noble metals on its surface. That is, the DPR catalyst 24 is a continuously regenerating type catalyst which uses a catalyst function of the noble metal to continuously oxidize (burn) particulate matters (PM) trapped by the filter.

The oxidation catalyst 22 here has the same construction as that of the oxidation catalyst 28. The oxidation catalysts 22 and 28 each are formed by carrying noble metals such as platinum (Pt) in the honeycomb structure. It should be noted that the oxidation catalyst 22 and the oxidation catalyst 28 each may be configured to be different from the above construction or the oxidation catalyst 22 may be configured to be different in construction from the oxidation catalyst 28. The oxidation catalyst 28 may be, as described above, provided to oxidize the ammonia leaked in the SCR catalyst 28 for purification processing.

Here, the oxidation catalyst 22, the DPR catalyst 24 and the SCR catalyst 26 are arranged in the exhaust passage 14 in that order from the upstream, but the arrangement order is not limited thereto. However, the oxidation catalyst 28 is arranged downstream of the SCR catalyst 26, preferably as in the case of the present embodiment, downstream of the SCR catalyst 26 and adjacent thereto. Further, the DPF is not limited to adopt the DPR catalyst 24, but other types of DPFs may be used. Specially the DPF may be configured only as a filter structure and may be structured so that at a point where a continuous operating time of the internal combustion engine exceeds a predetermined time or a pressure difference across the DPF is greater than or equal to a predetermined value, for example, fuel injection timing is delayed to generate later burning, as a result oxidizing and burning the trapped particulate matters for regeneration. However, the regeneration in the predetermined timing of the DPF can be applied also to the DPR catalyst 24.

An electronic control unit (ECU) 50 is provided as control means for managing control of the entire internal combustion engine 10 equipped with the urea supplying apparatus 40. The ECU 50 includes a CPU, a ROM, a RAM, input and output ports, a memory apparatus and the like. The ECU 50 controls a fuel injection valve (not shown) or the like so that a desired internal combustion engine control is performed based upon detection values obtained by using various sensors or the like. In addition, the ECU 50 controls the adding valve 30 and the pump 38 so as to control an addition amount of the urea water and addition timing of the urea water.

Sensors connected to the ECU 50 include a rotational speed sensor 52 for detecting an engine rotational speed of the internal combustion engine 10, a load sensor 54 for detecting an engine load, further an exhaust temperature sensor 56 for detecting a temperature of an exhaust gas, and first, second and third NOx sensors 58, 60 and 62 for detecting a NOx concentration in the exhaust gas. The rotational speed sensor 52 may be a crank angle sensor for detecting a crank angle of the internal combustion engine 10. The load sensor 54 may be an air flow meter sensor or an accelerator opening sensor. The exhaust temperature sensor 56 is here located in the exhaust passage 14u upstream of the oxidation catalyst 22, but may be located in other places. In addition, the first NOx sensor 58 is located in the exhaust passage 14m downstream of the DPR catalyst 24 and upstream of the SCR catalyst 26. The second NOx sensor 60 is located in the exhaust passage 14m downstream of the SCR catalyst 26 and upstream of the oxidation catalyst 28. The third NOx sensor 62 is located downstream of the oxidation catalyst 28. However, the first NOx sensor 58 may be omitted. It should be noted that the second NOx sensor 60 corresponds to the above upstream sensor S1 and the third NOx sensor 62 corresponds to the above downstream sensor S2. In addition, each construction of the NOx sensors 58, 60 and 62 is the same as that of each of the above NOx sensors S1 and S2.

The reducing agent supplying means included in the ammonia supplying means is configured to include the urea supplying apparatus 40, particularly a part of the ECU 50 as the control means thereof. In addition, the determining means for determining a component which has passed through the SCR catalyst 26 is configured to include a part of the ECU 50. The temperature determining means is configured to include both of temperature detecting means configured to include the exhaust temperature sensor 56 and a part of the ECU 50 for detecting or estimating a temperature of the SCR catalyst 26 and means configured to include a part of the ECU 50 for determining the temperature based upon the temperature of the SCR catalyst 26 detected or estimated by the temperature detecting means. However, the temperature detecting means may be configured to include the rotational speed sensor 52, the load sensor 54, and a part of the ECU 50 or may be configured to include a temperature sensor mounted directly to the SCR catalyst 26 and a part of the ECU 50.

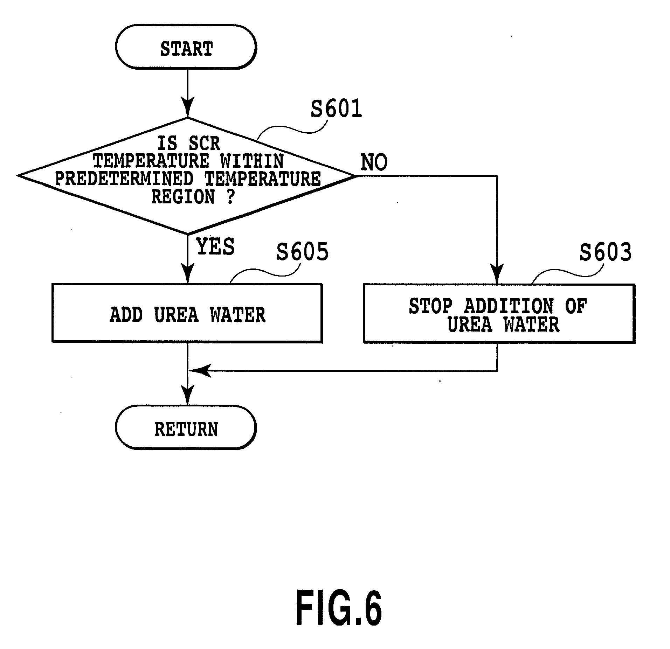

Here, first, addition and supply control of the urea water will be explained with reference to a flow chart in Fig. 6. Execution and suspension of the addition of the urea water in the addition and supply control of the urea water is controlled in accordance with a temperature (here, estimated value) of the SCR catalyst 26. Specially, when the SCR catalyst temperature is within a predetermined temperature region, the urea water addition is executed and when the SCR catalyst temperature is not within the predetermined temperature region, the urea water addition is suspended.

The temperature of the SCR catalyst 26 is here found by its estimation. Specially, the ECU 50 retrieves data which are in advance defined by experiments and stored therein, based upon an exhaust temperature detected based upon an output signal from the exhaust temperature sensor 56, thus estimating the SCR catalyst temperature. It should be noted that the estimation method is not limited to the above example. The temperature of the SCR catalyst 26 may be directly detected by using a temperature sensor embedded in the SCR catalyst 26. Or the temperature of the SCR catalyst 26 may be estimated based upon an engine operating state defined based upon output signals of the rotational speed sensor 52 and the load sensor 54.

At step S601 it is determined whether or not the temperature of the SCR catalyst 26 is within a predetermined temperature region. When a negative determination is here made, the process goes to step S603, wherein the addition of the urea water is suspended. On the other hand, when a positive determination is made at step S601, the process goes to step S605, wherein the addition of the urea water is executed. The predetermined temperature region at step S601 is here a temperature region (temperature region equal to or more than a lower limit temperature) where only the lower limit temperature is defined. This lower limit temperature is, for example, 200°C and can be called the minimum active temperature. The reason for thus defining the predetermined temperature region is that even if the addition of the urea water is executed before the SCR catalyst temperature reaches the minimum active temperature, NOx can not be efficiently reduced. It should be noted that an upper limit temperature may be defined to the predetermined temperature region.

When the positive determination is made at step S601 by determining that the temperature of the SCR catalyst 26 is within the predetermined temperature region, that is, when the addition of the urea water is executed, an addition amount or an addition timing of the urea water is controlled based mainly upon output from the first, second, third NOx sensors 58, 60 and 62. Here, the addition amount or the addition timing of the urea water is controlled based upon a NOx concentration (or NOx amount relating to this NOx concentration) in the exhaust gas detected based upon an output signal from the first NOx sensor 58. A basic addition amount or a basic addition timing of the urea water thereof is corrected based upon a NOx slip or an ammonia slip determined based upon an output signal from the second NOx sensor 60 or the third NOx sensor 62. Specially by retrieving data which is in advance defined by experiments and stored therein, with the NOx concentration detected based upon the output signal from the first NOx sensor 58, the basic addition amount or the basic addition timing of the urea water is defined, and based upon them, the pump 38 or the urea adding valve 30 is controlled. When it is, as described above, determined that the NOx slip occurs, based upon the output signals from the second NOx sensor 60 and the third NOx sensor 62, both or one of the basic addition amount or the basic addition timing of the urea water are corrected so that the addition amount of the urea water increases. On the other hand, when it is, as described above, determined that the ammonia slip occurs, based upon the output signals from the second NOx sensor 60 and the third NOx sensor 62, both or one of the basic addition amount and the basic addition timing of the urea water are corrected so that the addition amount of the urea water decreases.

It should be noted that the addition control of the urea water may be controlled so that the NOx concentration downstream of the SCR catalyst 26 becomes zero and the NOx slip or the ammonia slip does not occur, and the calculation or the control for it is not limited to the above embodiment. However, the NOx slip or the ammonia slip may be determined based upon a relation between outputs of the two sensors 60 and 62 which are located to interpose the oxidation catalyst 28 downstream of the SCR catalyst 26 therebetween. It should be noted that in a case where the first NOx sensor 58 is not provided, for example, a basic urea injection amount based upon an engine operating state (for example, engine rotational speed and engine load) may be feedback-corrected based upon the determination result based upon output signals from the two sensors 60 and 62 so that the NOx slip or the ammonia slip does not occur. Since the SCR catalyst 26 can reduce NOx only under existence of ammonia, the urea water may be added all the time.

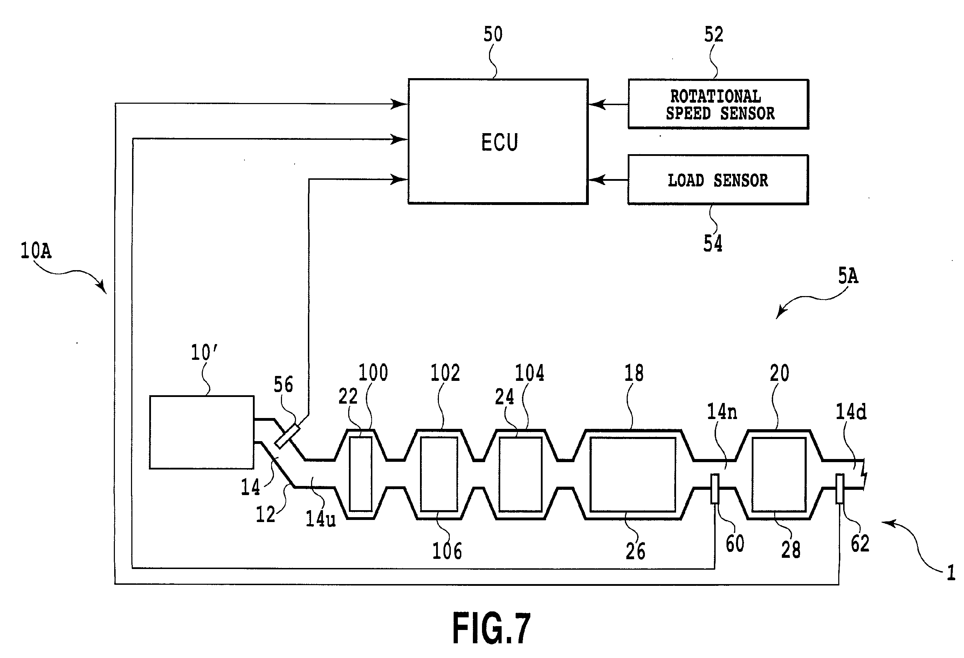

Next, an exhaust purification apparatus 5A in another embodiment in the present invention equipped with the above determining apparatus 1 will be explained. The exhaust purification apparatus 5A is configured so that the ammonia supplying means includes a catalyst having a generation capability of ammonia. That is, the exhaust purification apparatus 5A, which is different from the exhaust purification apparatus 5, is not equipped with the urea adding valve and the urea water tank for adding the urea water. Hereinafter, the exhaust purification apparatus 5A will be explained. It should be noted that Fig. 7 is a schematic diagram of an internal combustion engine 10A to which the exhaust purification apparatus 5A is applied. However, hereinafter, components identical or similar to those explained in the above embodiment are referred to as identical codes and the overlap explanation is omitted.

A eleventh catalytic converter 100, a twelfth catalytic converter 102, a thirteenth catalytic converter 104, a fourteenth catalytic converter 18, and a fifteenth catalytic converter 20 are serially provided in the exhaust passage 14 for the internal combustion engine 10 in that order from the upstream. In addition, the oxidation catalyst 22 is located in the eleventh catalytic converter 100, and the DPR catalyst 24 is located in the thirteenth catalytic converter 104. In addition, the SCR catalyst 26 is located in the fourteenth catalytic converter 18, and the oxidation catalyst 28 is located in the fifteenth catalytic converter 20. It should be noted that the fourteenth catalytic converter 18 corresponds to the above second catalytic converter, the fifteenth catalytic converter corresponds to the above third catalytic converter, and the sensors 60 and 62 are located to interpose the oxidation catalyst 28 in the fifteenth catalytic converter 20 therebetween.

Here, a catalyst 106 having ability for generating ammonia is located in the twelfth catalytic converter. The catalyst 106 in the twelfth catalytic converter functions to generate ammonia from a specific component in the exhaust gas. Here, since the catalyst 106 functions to generate ammonia from NOx, the catalyst 106 can be called a NOx removal catalyst.

The catalyst 106 functions, for example, in such a manner as to trap NO₂ ions in the exhaust gas in an operating state where fuel burns in a combustion chamber under a lean environment and facilitate reaction between the NO₂ ions and H₂ in the exhaust gas for generating ammonia in an engine operating state where fuel burns in the combustion chamber under a rich environment. It should be noted that the ECU 50 may control a fuel injection amount or the like in such a manner as to generate such ammonia generating reaction. However, the catalyst 106 is not limited to this construction and may be configured to have various constructions.

As described above, the present invention is explained with reference to the embodiment or the like, but various aspects of the above embodiment may be partially or entirely combined unless it is contradictory.

In addition, the present invention is applicable also to an internal combustion engine other than a compression ignition type internal combustion engine, for example, a spark ignition type internal combustion engine. It should be noted that the present invention is applicable to an apparatus emitting an exhaust gas containing NOx, which is other than the internal combustion engine.

As described above, the present invention is explained with reference to the various kinds of embodiments, but the present invention is not limited thereto. The present invention can include all variations and applications contained in the spirit of the present invention as claimed in claims and its equivalents. Accordingly, the present invention should not be interpreted in a limited way and can be applied to any other technology within the concept of the present invention.

## Claims

1. A catalyst passing component determining apparatus comprising:
a selective reduction type NOx catalyst located in an exhaust passage and being capable of purifying NOx with ammonia;
an oxidation catalyst located downstream of the selective reduction type NOx catalyst;
an upstream sensor located between the selective reduction type NOx catalyst and the oxidation catalyst and having ability to detect both ammonia and NOx;
a downstream sensor located downstream of the oxidation catalyst and having ability to detect both ammonia and NOx; and
determining means for determining a component passing through the selective reduction type NOx catalyst, based upon a relation between output of the upstream sensor and output of the downstream sensor.

2. A catalyst passing component determining apparatus according to claim 1, wherein the determining means determines that the NOx passes when the output of the upstream sensor and the output of the downstream sensor change in a similar manner from target outputs thereof.

3. A catalyst passing component determining apparatus according to claim 1 or 2, wherein the determining means determines that the ammonia passes when an output change of the upstream sensor from the target output and an output change of the downstream sensor from the target output each have a different tendency.

4. An exhaust purification apparatus for an internal combustion engine comprising:
the catalyst passing component determining apparatus according to any of claims 1 to 3.

5. An exhaust purification apparatus for an internal combustion engine according to claim 4 comprising:
reducing agent supplying means for supplying a reducing agent to the selective reduction type NOx catalyst,
wherein the reducing agent supplying means controls an addition reducing agent amount to the selective reduction type NOx catalyst based upon a determination result of the catalyst passing component determining apparatus.
